# EUROPÄISCHE PATENTSCHRIFT

(11) **EP 2 484 250 B1**
(45) Veröffentlichungstag und Bekanntmachung des Hinweises auf die Patenterteilung: **18.09.2013**
(21) Anmeldenummer: 12151338.6
(22) Anmeldetag: 17.01.2012
(51) Int. Cl.: A47J 27/08

(54) **Deckel mit Verriegelungsvorrichtung**
Lid with locking device
Couvercle doté d'un dispositif de verrouillage

(30) Priorität: 07.02.2011 DE 102011010550
(43) Veröffentlichungstag der Anmeldung: 08.08.2012
(73) Patentinhaber: Stellwag, Jürgen, 81241 München (DE)
(72) Erfinder: Stellwag, Jürgen, 81241 München (DE)
(74) Vertreter: Benninger, Johannes

(56) Entgegenhaltungen:
- DE-U1-202010 012 194

## Beschreibung

Die vorliegende Erfindung betrifft einen Deckel mit Verriegelungsvorrichtung zur Verwendung mit einem Topf gemäß den Merkmalen des Oberbegriffes des Anspruches 1.

Der Schnellkochtopf hat sich schon seit Jahren in vielen Haushalten als wichtiges Kochgerät etabliert, da er die Garzeit vieler Gerichte deutlich verkürzt. Das ist nicht nur energie- sondern auch vitaminschonend. Der Schnellkochtopf ist ein spezieller dickwandiger Kochtopf, dessen Öffnung einen nach außen gebogenen Rand mit bajonettartigen Aussparungen zur druckfesten Aufnahme des Deckels besitzt. Der Deckel ist besonders geformt, hat eine Gummiringdichtung und üblicherweise sowohl ein Regelventil als auch ein Sicherheitsventil zur Begrenzung des Drucks. Moderne Schnellkochtöpfe haben fest in den Deckel integrierte Ventile. Das Arbeitsventil besitzt meistens einen druckabhängig aufsteigenden Stift mit Ringmarkierungen zur Druckanzeige. Das Ventil ist heutzutage mit der Deckelverriegelung gekoppelt, so dass der Topf zur Unfallvermeidung nur geöffnet werden kann, nachdem der Druck abgelassen wurde. Ein fest aufgeschraubter Deckel, der über ein Sicherheitsventil verfügt, verschließt den Topf dicht.

Durch Erhitzen des Inneren auf über 100 Grad Celsius wird so im Kochtopf ein Überdruck von ca. 1 bar erzielt. Hierdurch wird die Kochzeit der meisten Nahrungsmittel deutlich verkürzt.

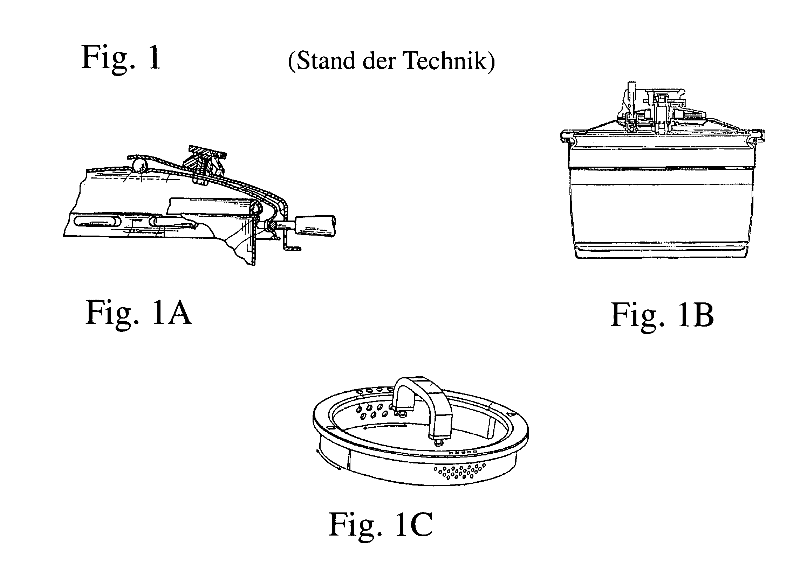

DE 2832608 zeigt einen Deckel für Kochtöpfe etc., wobei diese einen nach außen umgebördelten Rand aufweisen müssen. Mit diesem Deckel können die Behälter so fest verschlossen werden, dass sie im Dampfkochverfahren benutzt werden können (Fig.1A).

DE202010012194U1 beschreibt einen Deckel für einen Schnellkochtopf umfassend einen Zargendeckel mit Dichtung und Griff, wobei der Deckel auf dem Topf verriegelbar ist. Der Deckel weist einen Griff auf, der zusammen mit mindestens einem Teil eines Verriegelungsmechanismus vom Zargendeckel abnehmbar ist (Fig.1 B).

DE 102008008311 zeigt einen Deckel mit einem elastischen Ringelement. Dieser weist Öffnungen zum Ausgießen von Flüssigkeit auf, so dass er nicht für einen

Druckaufbau und somit nicht zur Verwendung als Deckel für einen Dampfgartopf geeignet ist (Fig.1C).

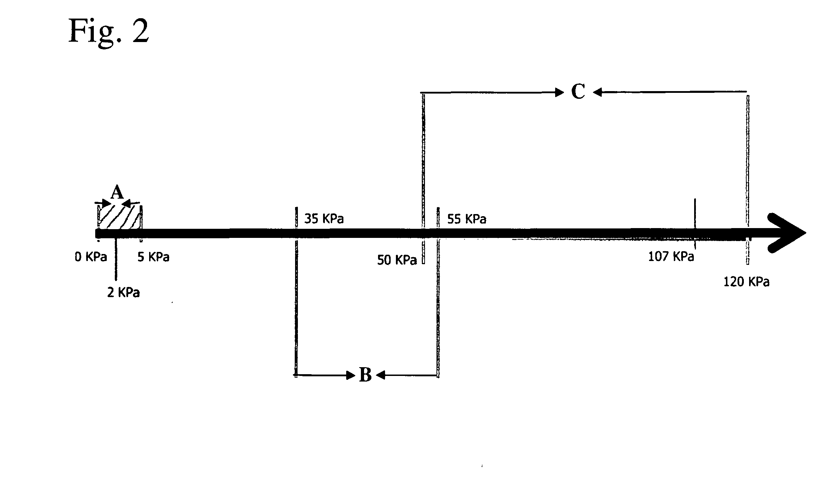

**Figur 2** stellt die beim Kochen verwendeten Druckverhältnisse dar. Die Zahlenangaben entsprechen dem in den Töpfen aufgebauten zusätzlichen Druck. A zeigt die Druckverhältnisse in Dampfgartöpfe des Typ I mit niedrigem Druck. Bei diesen wird ein Druck von bis zu 5kPa über dem Normdruck aufgebaut. Bei einem solchen niedrigen Überdruck muss vor dem Öffnen des Deckels kein Druck abgelassen werden. Insbesondere bis zu einem zusätzlichen Druck von ca. 2 kPa kann der Deckel ohne weiteres gefahrlos geöffnet werden. B stellt die Druckverhältnisse in Dampfgartöpfen des Typ II mit niedrigem Überdruck dar. Diese arbeiten im Allgemeinen mit einem zusätzlichen Druck von 35 bis 55 kPa. Bevor ein solcher Topf geöffnet werden kann, muss der überschüssige Dampf abgelassen werden. C bezeichnet die Druckverhältnisse in Schnellkochtöpfen, die mit hohem Druck arbeiten. Der in einem amerikanischen Standard Schnellkochtopf verwendete zusätzliche Druck beträgt ca. 107kPa, so dass im Topf ein Druck von ca. 2 bar vorherrscht.

Ein besonderer Nachteil der bekannten Vorrichtungen besteht insbesondere darin, dass diese im Allgemeinen aus einer Kombination eines Topfes mit passendem Deckel bestehen oder aber dass der Deckel nur zusammen mit Töpfen verwendet werden kann, die einen weitgehend gleichen Durchmesser aufweisen.

Die Aufgabe der Erfindung besteht darin, einen universell einsetzbaren Deckel zu schaffen, der an verschiedene Topfgrößen anpassbar ist und dazu geeignet ist, in Kombination mit einem geeigneten Topf diesen als Niedrigdruck- Dampfkochtopf zu verwenden.

Die obige Aufgabe wird durch einen Deckel gelöst, der die Merkmale in dem Patentanspruch 1 umfasst. Weitere vorteilhafte Ausgestaltungen werden durch die Unteransprüche beschrieben.

Die Erfindung betrifft einen Deckel für einen Kochtopf, der geeignet ist Töpfe unterschiedlicher Art als Dampfkochtopf mit geringem Überdruck zu verwenden. Wie die herkömmlich bekannten Deckel, die jeweils speziell für einen bestimmten Topf zugeschnitten sind, weist dieser Deckel wenigstens ein Ventil zum Ablassen von Dampf auf.

Erfindungsgemäß kann der Deckel mit Töpfen verschiedener Größe und verschiedener Ausführung der oberen Topfkante verwendet werden. Hierfür ist an der Unterseite des Deckels ein erstes ringförmiges Dichtelement vorgesehen. Weiterhin weist der Deckel mindestens eine Verriegelungsvorrichtung zur Anpassung an die Größe des Topfes auf. Insbesondere kann mit Hilfe der mindestens einen Verriegelungsvorrichtung und dem ersten ringförmigen Dichtelement eine form- und kraftschlüssige Verbindung zwischen dem Deckel und dem verwendeten Topf hergestellt werden. Insbesondere umfasst die Verriegelungsvorrichtung ein Konturteil, eine Betätigungsvorrichtung und eine Einstellvorrichtung, die miteinander in Wirkverbindung stehen.

Die Einstellvorrichtung umfasst ein zweites Dichtelement, das in und entgegen der Mitte des Deckels schiebebeweglich ist. Über die Betätigungsvorrichtung kann die Einstellvorrichtung so eingestellt werden, dass das zweite Dichtelement an den Topf gedrückt wird und in einem oberen Bereich an der Außenmantelfläche des Topfes anliegt. Im Zusammenhang mit dem ersten ringförmigen Dichtelement auf der Deckelunterseite kann somit eine form- und kraftschlüssige Verbindung zwischen dem Deckel und dem oberen Rand des Topfes hergestellt werden.

Das Konturteil ist über eine Welle drehbar an der Betätigungsvorrichtung angeordnet und steht in der Ausgangsstellung mit der Einstellvorrichtung in Berührung. Der Deckel wird auf den Topf aufgesetzt. Es können Töpfe mit unterschiedlichen Durchmessern verwendet werden, deren oberer Durchmesser zumindest geringfügig kleiner als der Deckeldurchmesser ist. Durch Betätigung der Betätigungsvorrichtung wird das Konturteil in Rotation versetzt. Das Konturteil weist vorzugsweise eine tropfenförmige o.ä. Gestalt auf. Vorzugsweise ist der Drehpunkt, d.h. die Befestigung der Betätigungsvorrichtung über die Welle dezentral am Konturteil angeordnet.

Durch die Bewegung des Konturteils wird die Einstellvorrichtung entlang der Kontur bewegt, so dass sich die Einstellvorrichtung zur Deckelmitte hin bewegt. Insbesondere kann die Einstellvorrichtung so lange in Richtung Deckelmitte verschoben werden, bis ein der Einstellvorrichtung zugeordnetes zweites Dichtelement am Topf anliegt. Durch das elastische zweite Dichtelement an der Einstellvorrichtung und dem ersten ringförmigen Dichtelement auf der Unterseite des Deckels wird somit eine feste form- und kraftschlüssige Verbindung zwischen Topf und Deckel hergestellt.

Gemäß einer bevorzugten Ausführungsform geht die Betätigungsvorrichtung anschließend automatisch in ihre Ausgangsposition zurück, während eine Rückbewegung der Einstellvorrichtung verhindert wird. Gemäß einer alternativen Ausführungsform bleibt die Einstellvorrichtung in der eingestellten Position oder wird vom Benutzer manuell zurück in die Ausgangsposition gebracht.

Bei der Betätigungsvorrichtung handelt es sich vorzugsweise um einen Betätigungsriegel oder einen Drehknebel. Die Einstellvorrichtung besteht aus einem Schiebeelement mit zweitem Dichtelement - insbesondere einer Dichtlippe aus einem thermoelastischen Kunststoff -, einer Blockierungsvorrichtung und einem Rückstellelement. Insbesondere besteht die Blockierungsvorrichtung aus einer Zahnstange und einer Ritzelstange, die miteinander Verrasten und somit eine ungewollte Rückbewegung des Schiebeelements verhindern.

Zum Abnehmen des Deckels muss die Blockierungsvorrichtung entriegelt werden, damit die Verriegelungsvorrichtung gelöst werden kann. Dies geschieht insbesondere durch Entriegelung der Verrastung zwischen Zahnstange und Ritzelstange, beispielsweise mit Hilfe einer Entriegelungsvorrichtung. Nachdem die Verrastung gelöst worden ist, kann die Einstellvorrichtung mit Hilfe des Rückstellelements wieder in die Ausgangsposition zurückbewegt werden, in der die Einstellvorrichtung wiederum an dem Konturteil anliegt.

Vorzugsweise ist die Verriegelungsvorrichtung in einem Gehäuse angeordnet, das zusätzlich als Halteelement für den Deckel bzw. für die Kombination aus Topf und verriegeltem Deckel dienen kann. Gemäß einer besonders bevorzugten Ausführungsform sind an dem Deckel zwei Halteelemente mit jeweils einer Verriegelungsvorrichtung einander gegenüber liegend angeordnet. Hierbei sind die Verriegelungsvorrichtungen insbesondere spiegelbildlich symmetrisch angeordnet. Dadurch ist es möglich, die Betätigungsvorrichtungen der beiden Verriegelungsvorrichtungen gleichzeitig zu betätigen und somit eine weitgehend analoge bzw. gleichmäßige Bewegung der Einstellvorrichtungen in Richtung Deckelmitte auszulösen. Der Topf wird somit von zwei Seiten her durch die Einstellvorrichtungen des Deckels eingeklemmt und durch die zweiten Dichtelemente der Einstellvorrichtungen sowie dem ersten ringförmigen Dichtelement werden feste Verbindungen zwischen Topf und Deckel hergestellt.

Herkömmliche Herde weisen im Allgemeinen Kochplatten mit unterschiedlichen Durchmessern, insbesondere mit Durchmessern von 14.5cm, 18cm und/oder 21 cm auf. Dementsprechend weisen die meisten Töpfe in Abhängigkeit von ihrer Form einen oberen Durchmesser zwischen 14cm bis 25 cm auf. Gemäß einer bevorzugten Ausführungsform weist der Deckel einen Durchmesser von ca. 25cm auf. Das erste ringförmige Dichtelement weist einen Außendurchmesser von ca. 25cm und einen Innendurchmesser zwischen ca. 10cm und ca. 20cm auf. Damit kann der Deckel mit Töpfen unterschiedlicher Größe, insbesondere mit Töpfen mit einem oberen Durchmesser zwischen 14cm bis 25 cm verwendet werden. Gemäß einer weiteren Ausführungsform weist der Deckel einen Durchmesser von ca. 29cm auf, wobei das erste ringförmige Dichtelement einen Innendurchmesser von 17 cm und einen Außendurchmesser von ca. 28,5cm aufweist, so dass der Deckel mit Töpfen mit einem oberen Durchmesser zwischen 18cm bis 28cm verwendet werden kann.

Der erfindungsgemäße Deckel zeichnet sich somit dadurch aus, dass er universell eingesetzt werden kann. Der Einsatz ist weder auf eine bestimmte Topfgröße noch auf eine bestimmte Topfform beschränkt. Es können also auch Töpfe verwendet werden, die keine zylindrische Form aufweisen, sondern beispielsweise im unteren Bereich bauchiger gestaltet sind o.ä. Weiterhin zeichnet sich der Deckel dadurch aus, dass mit diesem die gewünschten Druckbedingungen hergestellt werden können, ohne dass entsprechende Vorrichtungen am Topf vorgesehen sein müssen. Die am Deckel zur Verfügung gestellte Verriegelungsvorrichtung(en) ist ausreichend, um eine form- und kraftschlüssige Verbindung zwischen Deckel und Topf herzustellen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt verschiedene Schnellkochtöpfe und Deckel gemäß dem bekannten Stand der Technik.
Figur 2 zeigt die beim Kochen verwendeten Temperaturen und Druckverhältnisse.
Figur 3 zeigt den Verriegelungsmechanismus.
Figur 4 zeigt verschiedene Ansichten eines Universal- Deckels mit Verriegelungsmechanismus.
Figur 5 zeigt die Verriegelungsvorrichtung einer Ausführungsform eines Deckels gemäß Figur 4.

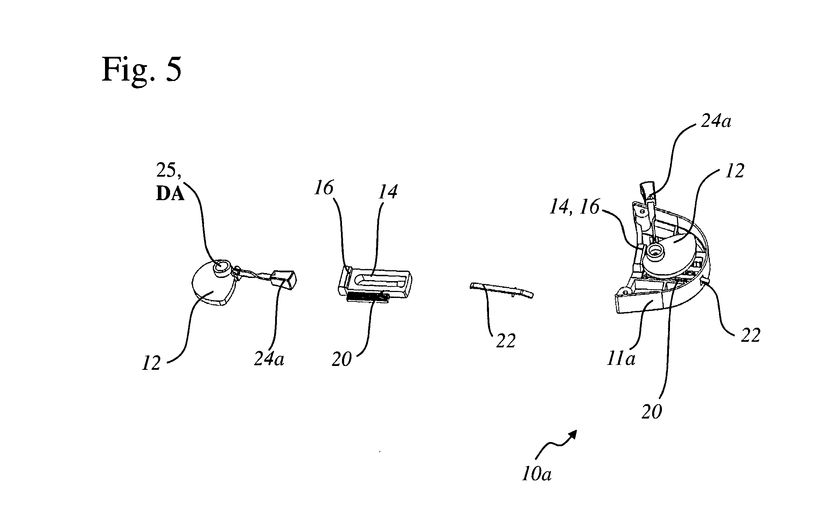

Figur 5 zeigt eine andere Ausführungsform des Verriegelungsmechanismus.

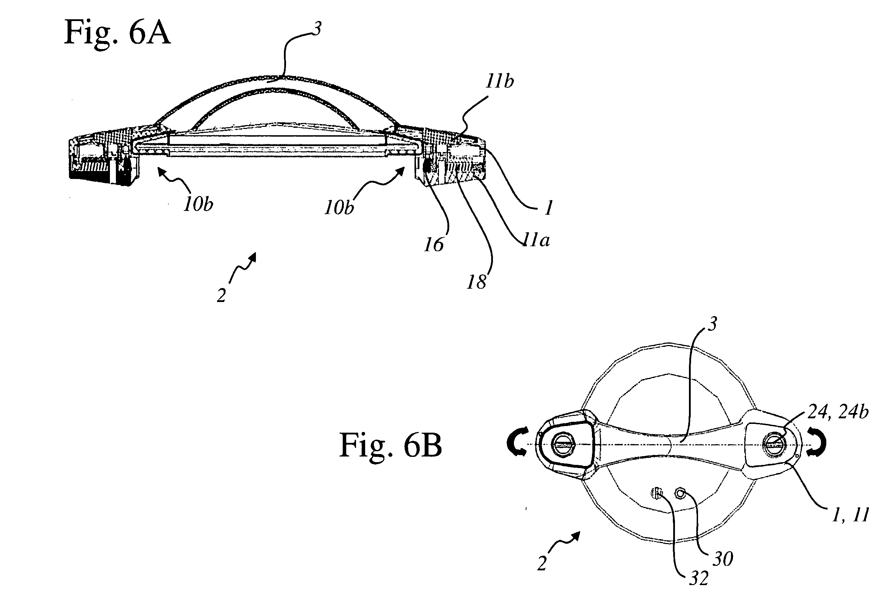

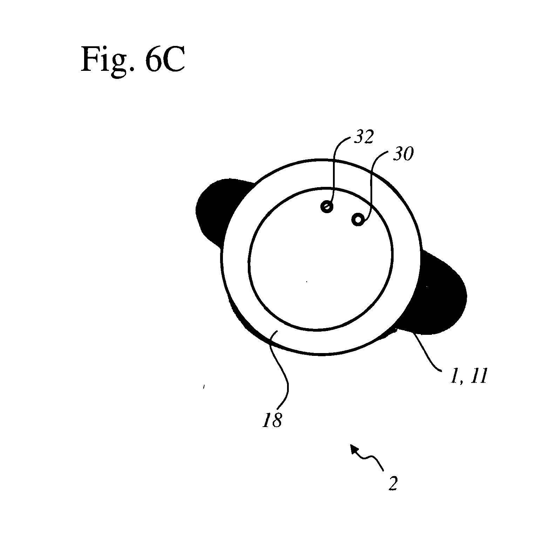

Figur 6 zeigt verschiedene Ansichten einer weiteren Ausführungsform eines Universal- Deckels mit Verriegelungsmechanismus.

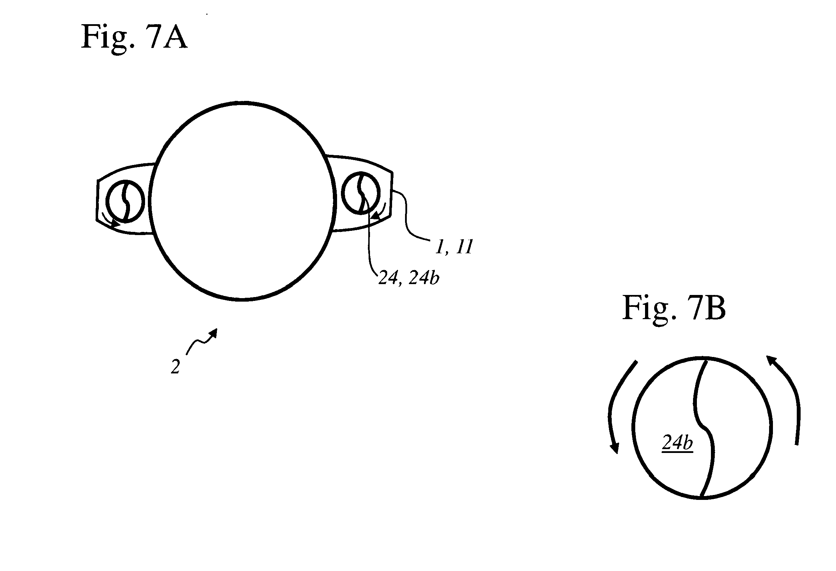

Figur 7 zeigt die Betätigungsvorrichtung eines Deckels gemäß Figur 6.

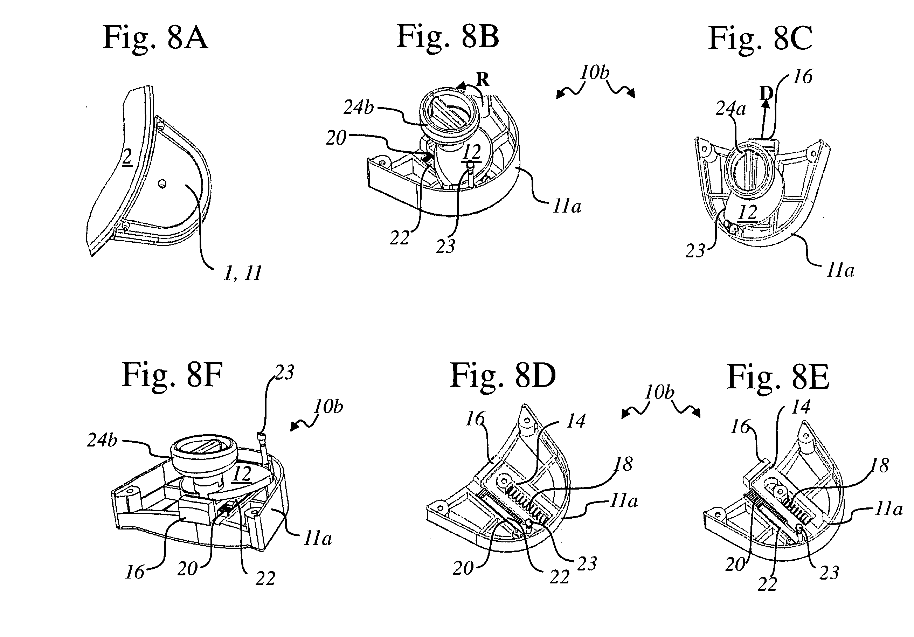

Figur 8 zeigt die Arbeitsweise eines Verriegelungsmechanismus gemäß Figur 6.

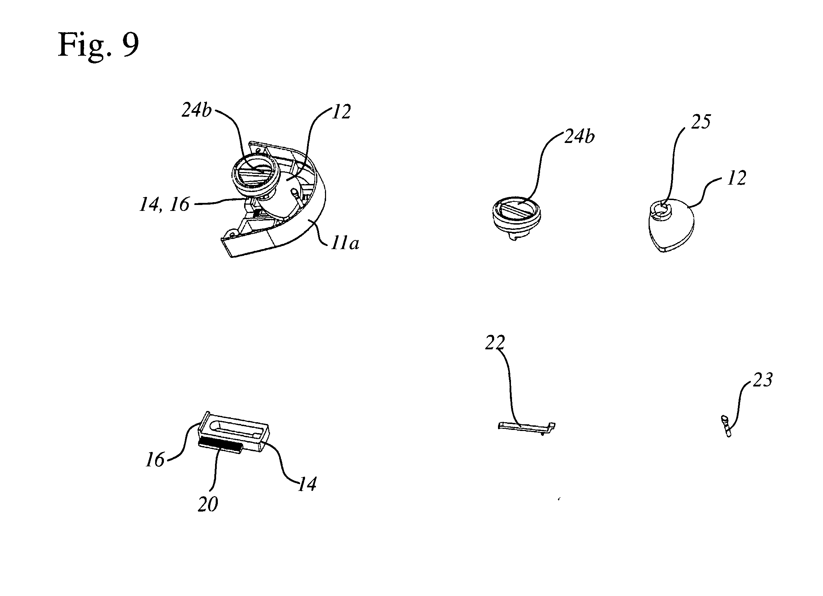

Figur 9 zeigt die einzelnen Bestandteile eines Verriegelungsmechanismus gemäß Figur 8.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

**Figur 1** und **Figur 2** zeigen den Stand der Technik und wurden bereits beschrieben.

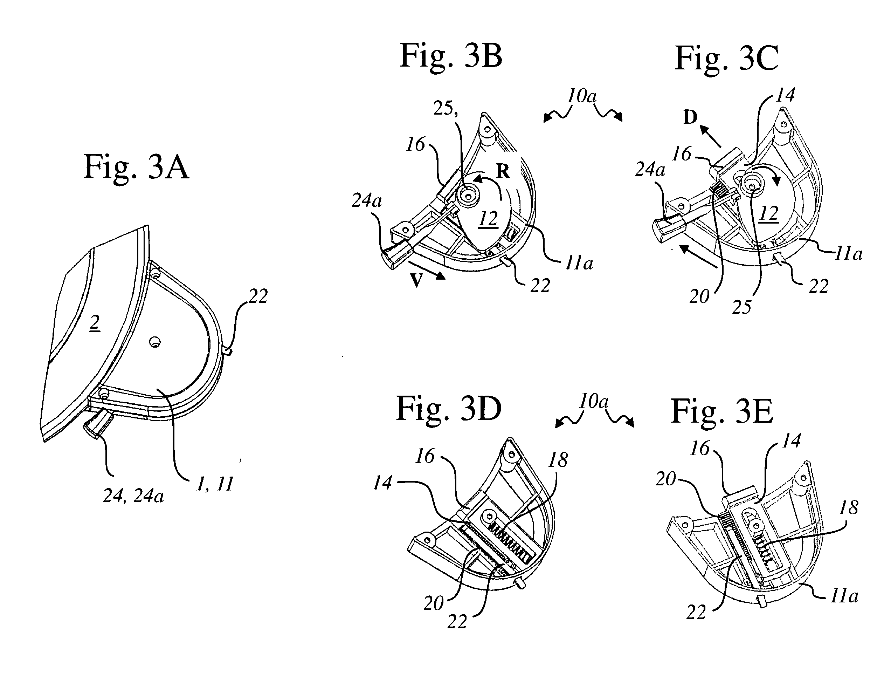

**Figur 3** zeigt die Funktionsweise einer ersten Ausführungsform des Verriegelungsmechanismus 10a. Der Verriegelungsmechanismus 10a ist jeweils in den beiden seitlichen, einander gegenüber liegenden Handgriffen 1 des Deckels 2 angeordnet. Die beiden Verriegelungsvorrichtungen 10a sind jeweils in einem Gehäuse 11 angeordnet, wobei die beiden Gehäuse 11 gleichzeitig die zwei seitlichen Handgriffe 1 bilden. Das Gehäuse 11 besteht vorzugsweise aus zwei Formteilen 11 a und 11 b (vgl. **Figur 6A****),** wobei in den **Figuren 3B bis 3E** jeweils eines der Gehäuseformteile 11 nicht dargestellt ist, um die Verriegelungsvorrichtung 10a sichtbar zu machen.

Die Verriegelungsvorrichtung 10a besteht aus einem Konturteil 12 mit zumindest teilweise annähernd tropfenförmiger Kontur, das drehbar an einem Betätigungselement 24 befestigt ist, einem Schiebeelement 14 mit Dichtelement 16 und einer Rückstellfeder 18.

Durch die Betätigung des Betätigungselementes 24, insbesondere durch Verschieben eines Riegels 24a in Verschieberichtung V, wird die Rotation R des Konturteils 12 um einen Drehpunkt der Befestigung 25 ausgelöst. Die Befestigung 25 und somit der Drehpunkt ist insbesondere dezentral am Konturteil 12 angeordnet. Im gezeigten Ausführungsbeispiel erfolgt eine Rotation des Konturteils 12 entgegen dem Uhrzeigersinn. Das Schiebeelement 14 ist in einem Ausgangszustand formschlüssig am Konturteil 12 angeordnet. Die Rotationsachse des Konturteils 12 ist vorzugsweise dezentral angeordnet, so dass bei Rotation R des Konturteils 12 **(****Fig. 3B****)** das Schiebeelement 14 aufgrund der Form des Konturteils 12 in Richtung Deckelmitte D verschoben wird **(****Fig. 3C****).**

Am Schiebeelement 14 ist eine Zahnstange 20 angebracht, die mit einer Ritzelstange 22 in Rastverbindung steht. Während der Bewegung des Schiebelements 14 in Richtung Deckelmitte D wird die jeweilige Position durch die Ritzelstange 22 mit der Zahnstange 20 verrastet, so dass eine ungewollte Rückbewegung des Schiebeelements 14 verhindert wird. Wenn das Schiebeelement 14 die Außenmantelfläche des Topfes 5 bzw. den Topfrand erreicht, ist eine weitere Vorwärtsbewegung blockiert. Die Rückwärtsbewegung ist durch die Verrastung zwischen Ritzelstange 22 und Zahnstange 20 versperrt. Der Deckel 2 ist fest mit dem Topf 5 verriegelt.

Der Betätigungshebel 24a und das Konturteil 12 gehen beim Loslassen des Riegels 24a automatisch in ihre jeweilige Ausgangsposition zurück **(****Fig. 3C****).**

**Figur 3D** und **Figur 3E** stellen die Situationen gemäß den **Figuren 3B** und **3C** ohne Konturteil 12 dar, so dass die vom Schiebeelement 14 eingenommenen Positionen besser sichtbar ist.

Um den Deckel 2 zu entriegeln und vom Topf 5 abzunehmen, wird die Verrastung zwischen Zahnstange 20 und Ritzelstange 22 durch Entriegelung der Ritzelstange 22 gelöst. Aufgrund der Rückstellkraft der dem Schiebeelement 14 zugeordneten Rückstellfeder 18 wird dieses wieder in die Ausgangsposition gemäß **Figuren 3A** und **3D** zurück bewegt.

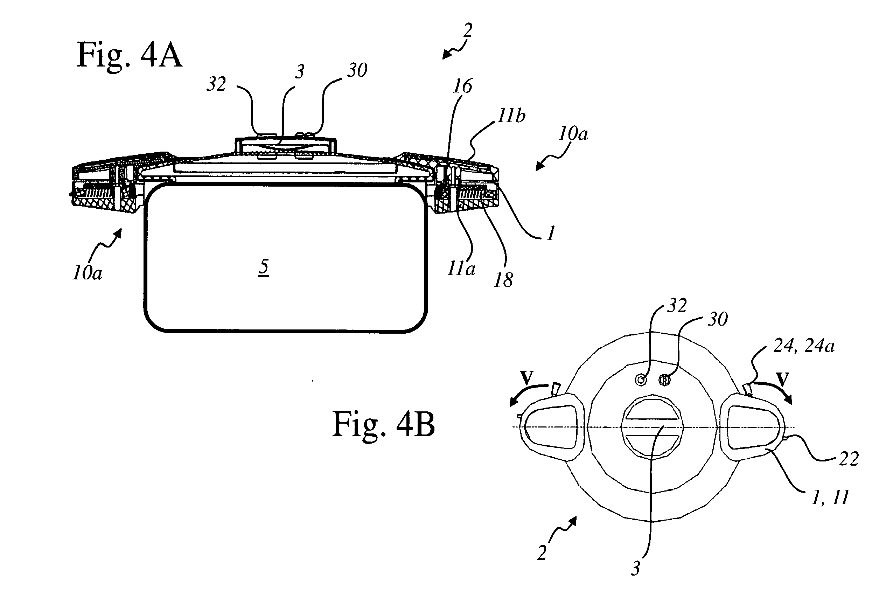

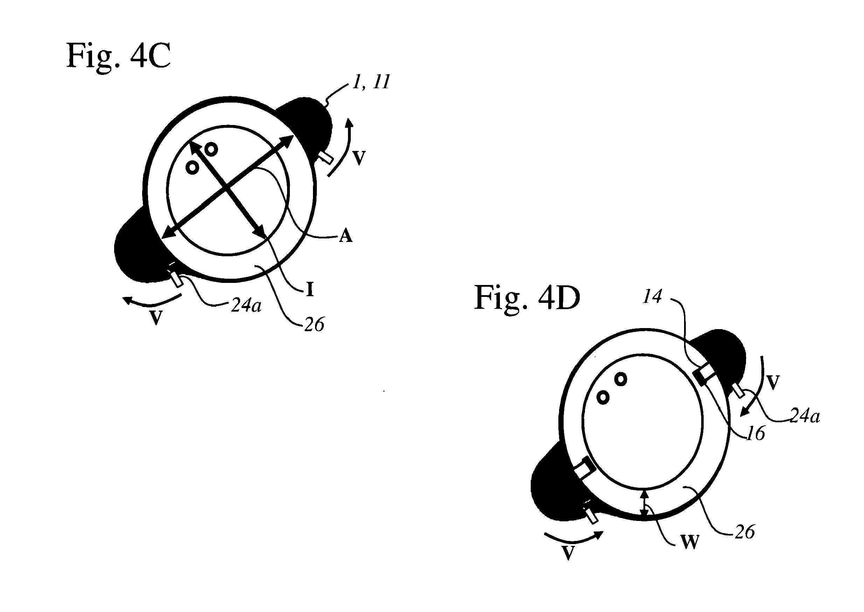

Der Verriegelungsmechanismus 10a bzw. die Einstellvorrichtung umfasst also ein Schiebeelement 14 mit Dichtelement 16, das in und entgegen der Mitte D des Deckels 2 (vgl. Figuren 4, 6, 7) schiebebeweglich ist. Über den Betätigungshebel 24a kann die Einstellvorrichtung / der Verriegelungsmechanismus 10a so eingestellt werden, dass das Dichtelement 16 in einem oberen Bereich an der Au βenmantelfläche des Topfes 5 anliegt. Im Zusammenhang mit dem ringförmigen elastischen Dichtelement 26 auf der Deckelunterseite (vgl. Figuren 4C, 4D, 6C) kann somit eine form- und kraftschlüssige Verbindung zwischen dem Deckel 2 (vgl. Figuren 4, 6, 7) und dem oberen Rand des Topfes 5 hergestellt werden.

**Figur 4** zeigt verschiedene Ansichten eines Universal- Deckels 2 mit dem beschriebenen Verriegelungsmechanismus 10a. Insbesondere zeigt **Figur 4A** einen Deckel 2 von der Seite, **Figur 4B** einen Deckel 2 von oben und **Figuren 4C** und **4D** einen Deckel 2 von unten.

Der Deckel 2 weist zusätzlich zu den beiden Handgriffen 1 noch einen oben angeordneten Griff 3 auf. Weiterhin sind im Deckel 2 ein Sicherheitsventil 30 und ein Ventil 32 zum Ablassen des Drucks beim Kochen vorgesehen.

Weiterhin ist in den Abbildungen der in **Figur 4** dargestellten Ausführungsform einer Betätigungsvorrichtung 24 in Form eines Riegels 24a dargestellt. Durch Verschiebung des Riegels 24a von der Mitte des Deckels 2 weg wird die in **Figur 3** beschriebene Rotation des Konturteils (nicht dargestellt) ausgelöst und die Bewegung des Schiebeelementes 14 in Richtung Deckelmitte ausgelöst **(****Fig. 4D****).** Insbesondere sind die beiden Verriegelungsvorrichtungen 10b in den Handgriffen 1 spiegelbildlich angeordnet, so dass sie vom Benutzer intuitiv gleichzeitigt betätigt werden können.

Der Deckel 2 weist zudem auf der Unterseite ein breites ringförmiges elastisches Dichtelement 26 auf. Beispielsweise weist der Deckel 2 einen Durchmesser von ca. 24cm bis 26cm auf und das Dichtelement 26 weist einen Innendurchmesser I von ca. 15cm bis 20cm und einen Au βendurchmesser A von ca. 24cm bis 26cm auf. Das Schiebeelement 14 muss in diesem Fall einen Verschiebeweg W von ca. 8cm bis 11cm zurücklegen können.

Der Deckel 2 wird auf einen Topf 5 mit einem oberen Durchmesser zwischen ca. 15cm bis ca. 26cm aufgesetzt. Durch Verschiebung der Riegel 24a wird das Schiebeelement 14 in Richtung Deckelmitte verschoben, bis das Dichtelement 16 an der Außenmantelfläche am Topf 5 anliegt und diesen einklemmt. Durch die elastischen Dichtelemente 16 am Schiebeelement 14 und das ringförmige Dichtelement 26 auf der Unterseite des Deckels 2 wird somit eine feste form- und kraftschlüssige Verbindung zwischen Topf 5 und Deckel 2 hergestellt. Der Riegel 24a geht anschließend automatisch in seine Ausgangsposition zurück, während eine Rückbewegung des Schiebeelements 14 durch die Verrastung der Zahnstange mit der Ritzelstange (nicht dargestellt) blockiert ist.

Der Deckel 2 ist somit an eine Vielzahl von handelsüblich erhältlichen Töpfen mit einem oberen Durchmesser von ca. 15cm bis ca. 26cm anpassbar. Die Erfindung ist nicht auf Deckel 2 mit der beschriebenen Größe beschränkt, die Verwendung von größeren oder kleineren Deckeln 2 mit entsprechend angepasstem ringförmigem Dichtelement 26 und mit mindestens einem entsprechenden Schiebeelement 14 soll ebenfalls umfasst sein. Der erfindungsgemäße Deckel 2 kann also universell eingesetzt werden, d.h. der Einsatz ist weder auf eine bestimmte Topfgröße noch auf eine bestimmte Topfform beschränkt. Die verwendete Größe des Topfes 5 wird nur durch die Größe des ringförmigen elastischen Dichtelements 26 auf den Unterseite des Deckels 2 beschränkt, insbesondere durch dessen inneren und äußeren Durchmesser I, A. Insbesondere kann bei einer Kombination aus dem erfindungsgemäßen Deckel 2 und einem (fast) beliebigen Topf 5 eine form- und kraftschlüssige Verbindung zwischen Deckel 2 und Topf 5 hergestellt werden, so dass diese Kombination aus Deckel 2 und Topf 5 als Dampfkochtopf mit geringem Überdruck verwendet werden kann.

**Figur 5** zeigt noch einmal die Verriegelungsvorrichtung 10a einer Ausführungsform eines Deckels 2 gemäß **Figur 4** sowie die einzelnen Bestandteile Konturteil 12, Schiebeelement 14 mit Dichtelement 16; Zahnstange 20 und Ritzelstange 2 sowie die Anordnung der einzelnen Komponenten in einem Gehäuseteil 11a. Insbesondere verdeutlicht **Figur 5** die dezentrale Befestigung 25 des Betätigungsriegels 24a am Konturteil 12, so dass eine Betätigung des Riegels 24a zu der in **Figur 3** beschriebenen Bewegung des Konturteils 12 und somit des Schiebeelements 14 führt.

**Figur 6** zeigt verschiedene Ansichten eines Universal- Deckels 2 mit einer anderen Ausführungsform des Verriegelungsmechanismus 10b. Anstelle eines Betätigungsriegels weist der hier dargestellte Deckel 2 einen Drehknebel 24b auf. Durch Drehen dieser Drehknebel 24b (vgl. **Figur 7**) wird eine Rotation des Konturteils 12 und somit eine Bewegung des Schiebeelements 14 in Richtung Deckelmitte D (vgl. **Figur 8C**) ausgelöst. Für weitere Details wird auf die Beschreibung der **Figuren 3** **und** **4** verwiesen.

**Figur 8** stellt analog zu **Figur 3** die Arbeitsweise eines Verriegelungsmechanismus 10b mit Drehknebeln 24b als Betätigungsvorrichtung 24 dar. Insbesondere ist bei dieser Ausführungsform eine Entriegelungsvorrichtung 23 zum Lösen der Verrastung zwischen Zahnstange 20 und Ritzelstange 22 vorgesehen. **Figur 8F** zeigt noch einmal eine andere Ansicht der Verriegelungsvorrichtung 10b im Ausgangszustand gemäß **Figuren 8B und 8D****.**

**Figur 9** zeigt analog zu **Figur 5** die einzelnen Bestandteile eines Verriegelungsmechanismus gemäß **Figur 8****.**

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 1: Handgriff
- 2: Deckel
- 5: Topf
- 10a: Verriegelungsmechanismus
- 10b: Verriegelungsmechanismus
- 11: Gehäuse
- 11 a: Gehäuseformteil
- 11 b: Gehäuseformteil
- 12: Konturteil
- 14: Schiebeelement
- 16: Dichtelement
- 18: Rückstellfeder
- 20: Zahnstange
- 22: Ritzelstange
- 23: Entriegelungsvorrichtung
- 24: Betätigungsvorrichtung
- 24a: Riegel
- 24b: Drehknebel
- 25: Befestigung
- 26: ringförmiges Dichtelement
- 30: Sicherheitsventil
- 32: Ventil zum Druckausgleich

- A: Außendurchmesser
- D: Deckelmitte
- I: Innendurchmesser
- R: Rotation
- V: Verschieberichtung
- W: Verschiebeweg

## Patentansprüche

1. Deckel (2) für einen Kochtopf, wobei die Kombination aus Deckel (2) und einem Topf (5) als Dampfkochtopf mit geringem Überdruck verwendbar ist, wobei der Deckel (2) mindestens ein Halteelement (1, 3) und mindestens ein Ventil (30) zum Ablassen von Dampf aufweist, wobei auf der Unterseite des Deckels (2) ein erstes ringförmiges Dichtelement (26) angeordnet ist, **dadurch gekennzeichnet, dass** der Deckel mindestens eine Verriegelungsvorrichtung (10a, 10b) zur Anpassung an die Größe des Topfes (5) aufweist, wobei die mindestens eine Verriegelungsvorrichtung (10a, 10b) ein Konturteil (12), eine Betätigungsvorrichtung (24) und eine Einstellvorrichtung mit einem zweiten Dichtelement (16) umfasst, die miteinander in Wirkverbindung stehen, wobei das zweite Dichtelement (16) in und entgegen der Mitte des Deckels (2) schiebebeweglich ist und wobei über das zweite Dichtelement (16) der mindestens einen Verriegelungsvorrichtung (10a, 10b) eine form- und kraftschlüssige Verbindung zwischen dem Deckel (2) und einem oberen Bereich der Außenmantelfläche des Topfes (5) herstellbar und wobei über das erste ringförmige Dichtelement (26) eine form- und kraftschlüssige Verbindung zwischen dem Deckel (2) und dem oberen Rand des Topfes (5) herstellbar ist.

2. Deckel (2) nach Anspruch 1, wobei das Konturteil (12) über eine Welle drehbar an der Betätigungsvorrichtung (24) angeordnet ist und wobei die Befestigung (25) der Welle dezentral am Konturteil (12) angeordnet ist.

3. Deckel (2) nach Anspruch 1 oder 2, wobei das Konturteil (12) in einer Ausgangsstellung mit der Einstellvorrichtung in Berührung steht.

4. Deckel (2) nach einem der Ansprüche 1 bis 3, wobei die Betätigungsvorrichtung (24) ein Betätigungsriegel (24a) oder ein Drehknebel (24b) ist.

5. Deckel (2) nach einem der Ansprüche 1 bis 4, wobei die Einstellvorrichtung ein Schiebeelement (14) mit einem zweiten Dichtelement (16), eine Blockierungsvorrichtung und ein Rückstellelement (18) umfasst.

6. Deckel (2) nach Anspruch 5, wobei das Rückstellelement (18) eine Rückstellfeder, insbesondere eine Schraubenfeder ist.

7. Deckel (2) nach einem der Ansprüche 5 oder 6, wobei die Blockierungsvorrichtung eine Zahnstange (20) und eine Ritzelstange (22) umfasst.

8. Deckel (2) nach Anspruch 7, wobei die Verriegelungsvorrichtung (10a, 10b) eine Entriegelungsvorrichtung (23) für die Blockierungsvorrichtung, insbesondere für die Ritzelstange (22) umfasst.

9. Deckel (2) nach einem der Ansprüche 1 bis 8, wobei am Deckel (2) zwei Halteelemente (1) mit jeweils einer Verriegelungsvorrichtung (10a, 10b) einander gegenüber liegend angeordnet sind.

10. Deckel (2, 2b) nach einem der Ansprüche 1 bis 9, wobei der Deckel (2) einen Durchmesser von ca. 29cm aufweist und wobei das ringförmige Dichtelement (26) einen Außendurchmesser (A) von ca. 28,5cm und einen Innendurchmesser (I) zwischen ca. 17cm aufweist.

## Claims

1. Cover (2) for a cooking pot (5), whereby the combination of cover (2) and pot (5) is used as a pressure cooker with a slight overpressure, whereby the cover (2) comprises at least one handle (1, 3) and at least one valve (30) for pressure release, with a first annular sealing element (26) being arranged at the bottom side of the cover (2), **characterized in that** the cover (2) comprises at least one locking means (10a, 10b) to adapt to the size of the pot (5), whereby the at least one locking means (10a, 10b) comprises a contour portion (12), an actuating means (24) and an adjustment means (14) with a second sealing element (16), whereby the actuating means (24) and the adjustment means (14) are operatively connected to each other, whereby the second sealing element (16) is slidably movable in and against the center of the cover (2) and whereby a form- locking and force- locking connection between the cover (2) and an upper part of the outer surface of the pot (5) is producible by the second sealing element (16) of the at least one locking means (10a, 10b) and whereby a form- locking and force- locking connection between the cover (2) and the upper edge of the pot (5) is producible by the first annular sealing element (26).

2. Cover (2) according to claim 1, whereby the contour portion (12) is rotatably mounted on the actuating means (24) via a shaft and whereby the attachment (25) of the shaft is peripherally arranged on the contour portion (12).

3. Cover (2) according to claim 1 or 2, whereby the contour portion (12) is in contact with the adjustment means in an initial position.

4. Cover (2) according to one of the claims 1 to 3, whereby the actuating means (24) is an actuating bolt (24a) or a rotary knob (24b).

5. Cover (2) according to one of the claims 1 to 4, whereby the adjustment means comprises a sliding element (14) with a second sealing element (16), a blocking means and a return element (18).

6. Cover (2) according to claim 5, whereby the return element (18) is a restoring spring, especially a coil spring.

7. Cover (2) according to claims 5 or 6, whereby blocking means comprises a toothed rack (20) and a pinion rod (22).

8. Cover (2) according to claim 7, whereby the locking means (1 0a, 10b) comprises a releasing means (23) for the blocking means, especially whereby the locking means (10a, 10b) comprises a pinion rod (22).

9. Cover (2) according to one of the claims 1 to 8, whereby two holding elements (1), each comprising a locking means (10a, 10b), are arranged on opposite sides of the cover (2).

10. Cover (2) according to one of the claims 1 to 9, whereby the cover (2) has a diameter of about 29cm and whereby the annular sealing element (26) has an outer diameter (A) of about 28,5cm and an inner diameter (I) of about 17cm.

## Revendications

1. Couvercle (2) pour une casserole, la combinaison de couvercle (2) et d'une casserole (5) pouvant être utilisée comme autocuiseur à faible surpression, ledit couvercle (2) présentant au moins un élément de maintien (1, 3) et au moins une valve (30) d'évacuation de vapeur, un premier élément d'étanchéité (26) annulaire étant disposé sur la face inférieure du couvercle (2), **caractérisé par le fait que** ledit couvercle présente au moins un dispositif de verrouillage (10a, 10b) pour l'adaptation à la taille de la casserole (5), ledit au moins un dispositif de verrouillage (10a, 10b) comprenant une partie de contour (12), un dispositif de manoeuvre (24) et un dispositif de réglage avec un deuxième élément d'étanchéité (16) qui sont en liaison active entre eux, ledit deuxième élément d'étanchéité (16) étant mobile en translation au et à l'encontre du milieu du couvercle (2), et par ledit deuxième élément d'étanchéité (16) dudit au moins un dispositif de verrouillage (10a, 10b) pouvant être réalisée une liaison à engagement positif et par adhérence entre le couvercle (2) et une zone supérieure de la surface latérale extérieure de la casserole (5), et par ledit premier élément d'étanchéité (26) annulaire pouvant être réalisée une liaison à engagement positif et par adhérence entre le couvercle (2) et le bord supérieur de la casserole (5).

2. Couvercle (2) selon la revendication 1, dans lequel ladite partie de contour (12) est disposée à rotation par un arbre sur ledit dispositif de manoeuvre (24) et dans lequel le dispositif de fixation (25) de l'arbre est disposé à distance du centre sur ladite partie de contour (12).

3. Couvercle (2) selon la revendication 1 ou 2, dans lequel, dans une position initiale, ladite partie de contour (12) est en contact avec ledit dispositif de réglage.

4. Couvercle (2) selon l'une quelconque des revendications 1 à 3, dans lequel le dispositif de manoeuvre (24) et un verrou de manoeuvre (24a) ou une manette de rotation (24b).

5. Couvercle (2) selon l'une quelconque des revendications 1 à 4, dans lequel ledit dispositif de réglage comprend un élément coulissant (14) avec un deuxième élément d'étanchéité (16), un dispositif de blocage et un élément de rappel (18).

6. Couvercle (2) selon la revendication 5, dans lequel ledit élément de rappel (18) est un ressort de rappel, en particulier un ressort à boudin.

7. Couvercle (2) selon l'une quelconque des revendications 5 ou 6, dans lequel ledit dispositif de blocage comprend une crémaillère (20) et une tige de pignon (22).

8. Couvercle (2) selon la revendication 7, dans lequel ledit dispositif de verrouillage (10a, 10b) comprend un dispositif de déverrouillage (23) pour le dispositif de blocage, en particulier pour ladite tige de pignon (22).

9. Couvercle (2) selon l'une quelconque des revendications 1 à 8, dans lequel deux éléments de maintien (1) ayant chacun un dispositif de verrouillage (10a, 10b) sont disposés en regard l'un de l'autre sur ledit couvercle (2).

10. Couvercle (2, 2b) selon l'une quelconque des revendications 1 à 9, dans lequel ledit couvercle (2) présente un diamètre de 29 cm à peu près et dans lequel ledit élément d'étanchéité (26) annulaire présente un diamètre extérieur (A) d'environ 28,5 cm et un diamètre intérieur (1) de 17 cm à peu près.
